# NEUE EUROPÄISCHE PATENTSCHRIFT

(11) **EP 2 886 231 B2**
(45) Veröffentlichungstag und Bekanntmachung des Hinweises auf die Entscheidung über den Einspruch: **09.12.2020**
(45) Hinweis auf die Patenterteilung: 13.07.2016
(21) Anmeldenummer: 13197740.7
(22) Anmeldetag: 17.12.2013
(51) Int. Cl.: B23C 3/00, B25B 11/00, B23C 1/00, B23Q 11/00, B23Q 3/08, B23Q 3/06

(54) **Verfahren zum Herstellen eines Karosserieformteils**
Method of manufacturing a formed portion of a car body
Procédé de fabrication d'une pièce de carosserie formée par emboutissage

(43) Veröffentlichungstag der Anmeldung: 24.06.2015
(73) Patentinhaber: MN Coil Servicecenter GmbH, 23730 Neustadt (DE)
(72) Erfinder: Bechert, Anja, 20148 Hamburg (DE); Leutemann, Dennis, 23758 Wangels (DE)
(74) Vertreter: Patentanwälte Vollmann Hemmer Lindfeld Partnerschaft mbB

(56) Entgegenhaltungen:
- EP-A1- 1 403 014
- EP-A2- 0 339 595
- DE-A1- 4 002 469
- DE-A1-102004 006 854
- US-A- 2 782 574
- US-A- 4 582 305
- US-B1- 6 217 013

## Beschreibung

Die Erfindung betrifft ein Verfahren zum Herstellen eines Automobilkarosserieformteils bzw. eines Zuschnitts hierfür gemäß den im Oberbegriff des Anspruchs 1 angegebenen Merkmalen.

Karosserieformteile, wie sie bei der Automobilindustrie seit Jahrzenten millionenfach eingesetzt werden, werden in großen Stückzahlen kostengünstig hergestellt. Hierzu wird als Ausgangsmaterial ein Blechcoil verwendet, das zu plattenförmigen Abschnitten abgelängt und nachfolgend gerichtet wird. Ein solcher in der Regel rechteckiger Feinblechabschnitt wird dann entsprechend der Form des herzustellenden Automobilkarosserieformteils zugeschnitten und nachfolgend mit einem Tiefzieh- oder Presswerkzeug verformt. Dabei ist es wesentlich, dass die Oberfläche des Werkstücks bis zum Rand hin glatt und unbeschädigt bleibt, um weitere Nachbearbeitungen vor dem Lackieren zu vermeiden.

Bei Automobilkarosserieformteilen, die in großer Stückzahl hergestellt werden, erfolgt der Zuschnitt typischerweise durch Stanzen. Sowohl die hierzu erforderliche Maschine als auch das stets werkstückabhängige Werkzeug sind aufwendig und teuer. Darüber hinaus beeinträchtigt der Stanzvorgang das Werkstoffgefüge im Randbereich ungünstig. Es zählt daher zum Stand der Technik bei Automobilkarosserieformteilen, die in kleineren und mittleren Stückzahlen hergestellt werden, den Zuschnitt durch Brennen, insbesondere durch Laserschneiden, herzustellen. Dieses Verfahren hat allerdings auch den Nachteil, dass im Randbereich Gefügeveränderungen stattfinden, insbesondere eine Verhärtung und Versprödung eintritt, die nachteilig für den nachfolgenden Umformvorgang ist und die nicht gewünscht ist. Ein besonderes Problem tritt insoweit bei den in jüngster Zeit vermehrt verwendeten Leichtmetallwerkstoffen, insbesondere Aluminium, auf, das an seiner Außenseite durch eine Oxydschicht mit extrem hohem Schmelzpunkt geschützt ist, im Inneren jedoch einen Schmelzpunkt von nur knapp 700 °C hat. Dies führt dazu, dass beim thermischen Schneiden, also auch beim Elektronenstrahlschneiden, die Schnittfläche, insbesondere in dem Bereich, in dem der Elektronenstrahl wieder aus dem Material austritt, Fertigungsungenauigkeiten aufweist, die nicht erwünscht sind und häufig eine Nachbearbeitung erfordern.

Vor diesem Hintergrund liegt der vorliegenden Erfindung die Aufgabe zugrunde, ein Verfahren zum Herstellen eines Automobilkarosserieformteils, insbesondere zum Herstellen eines Zuschnitts aus einem Feinblechabschnitt, dahingehend zu verbessern, dass die vorgenannten Nachteile nicht auftreten, insbesondere auch Feinbleche aus Aluminium kostengünstig gefertigt werden können. Im Weiteren soll die hierzu erforderliche vorrichtungsmäßige Ausbildung zur Verfügung gestellt werden, um ein solch verbessertes Verfahren durchführen zu können.

Der verfahrensmäßige Teil der vorgenannten Aufgabe wird durch das erfindungsgemäße Verfahren gemäß Anspruch 1 gelöst. Vorteilhafte Ausgestaltungen der erfindungsgemäßen Verfahren bzw. ergeben sich aus den Unteransprüchen, der nachfolgenden Beschreibung und der Zeichnung. Hierbei können die in den Unteransprüchen und der Beschreibung angegebenen Merkmale jeweils für sich aber auch in geeigneter Kombination die erfindungsgemäße Lösung weiter ausgestalten.

Grundgedanke der vorliegenden Erfindung ist es, zum Herstellen eines Zuschnitts aus einem Feinblechabschnitt zum Herstellen eines Automobilkarosserieformteils den Zuschnitt aus einem Feinblechabschnitt nicht wie beim Stand der Technik mittels Laserstrahl herauszuschneiden, sondern für das Herausschneiden des Zuschnitts eine spanabhebende Bearbeitung vorzusehen sowie einen Feinblechabschnitt aus Leichtmetall zu verwenden. Dieses Verfahren ist insbesondere vorteilhaft im Verfahren zum Herstellen eines Automobilkarosserieformteils anzuwenden, bei dem auf den Zuschnitt folgend eine plastische Verformung zu einem Hohlkörper erfolgt, der das spätere Automobilkarosserieformteil oder zumindest einen Teil davon bildet. Mit dem erfindungsgemäßen Verfahren können sehr hohe Qualitätsanforderungen erfüllt werden, und zwar sowohl im Hinblick auf nicht erfolgende Gefügeänderungen durch das Schneiden als auch im Hinblick auf die damit erzielbare hohe Oberflächenqualität aller Seitenflächen, einschließlich der Schnittfläche.

Das erfindungsgemäße Verfahren ist insbesondere zum Herstellen von Zuschnitten aus Feinblechabschnitten vorteilhaft, die aus Leichtmetall bestehen. Zum einen ist Leichtmetall besonders gut spanabhebend zu bearbeiten, zum anderen treten bei Anwendung des erfindungsgemäßen Verfahrens gerade bei Verwendung von Leichtmetall die bei thermischen Trennverfahren auftretenden Gefügeveränderungen im Bereich der Schneidflächen nicht oder zumindest nicht spürbar auf. Mit dem erfindungsgemäßen Verfahren können Automobilkarosserieformteile, oder zumindest Teile davon, kostengünstig mit hoher Genauigkeit und hoher Oberflächenqualität auch in kleinen und mittleren Stückzahlen hergestellt werden.

Insbesondere bei Aluminium oder aus Aluminiumlegierung bestehenden Feinblechen, also Blechen mit einer Dicke bis 3 mm, wird das Herausschneiden des Zuschnitts erfindungsgemäß durch Fräsen, insbesondere durch High Speed Cutting erfolgen. Bei diesem Fräsen ist typischerweise keine Kühlung oder Schmierung während des Schneidens erforderlich. Es können kleine leichte Maschinen bekannter Bauart Verwendung finden. Die in diesem Zusammenhang zu verwendenden Fräser, die beispielsweise einen Durchmesser von 6 mm haben, haben lange Standzeiten und sind kostengünstig in der Beschaffung. Sie erlauben hohe Schnittgeschwindigkeiten und damit eine wirtschaftliche Fertigung der Zuschnitte. Dabei können je nach Größe und Art der Zuschnitte ein oder mehrere gleiche oder auch unterschiedliche Fräser mit entsprechenden Antrieben eingesetzt werden.

Um insbesondere eine hohe Oberflächenqualität der Zuschnitte sicherzustellen, ist gemäß einer Weiterbildung der Erfindung während des Schneidvorgangs beim Herausschneiden des Zuschnitts eine Absaugung von Schneidpartikeln vorgesehen. Eine solche Absaugung erfolgt vorteilhaft durch eine oder mehrere unmittelbar neben dem Fräser positionierte Saugdüsen oder vorteilhaft auch durch eine zentrale, den Fräser umgebende Saugdüse.

Zwar sind insbesondere die beim High Speed Cutting von Aluminiumfeinblechen der vorgenannten Art auftretenden Schnittkräfte vergleichsweise gering, doch ist es stets erforderlich, das Werkstück während der Bearbeitung in geeigneter Weise zu fixieren. Nach dem erfindungsgemäßen Verfahren ist hierzu vorgesehen, dass das Herausschneiden des Zuschnitts auf einer Fräsmaschine, vorzugsweise einer Portalfräsmaschine, erfolgt, die einen Maschinentisch aufweist, auf dem der Feinblechabschnitt während des Schneidens durch Vakuumspanntechnik gehalten wird. Vakuumspanntechnik ist nicht nur ein kostengünstiges und hinsichtlich des Werkstückwechsels vorteilhaftes Spannverfahren, sondern eignet sich insbesondere um eine hohe Oberflächengüte zu erhalten, da das sonst übliche beidseitige Einspannen entfällt. Durch das Ansaugen wird die Werkstückoberfläche großflächig belastet, sodass ohne besondere Vorkehrungen, Beeinträchtigungen der empfindlichen Werkstückoberflächen vermieden werden.

Um das erfindungsgemäße Verfahren insbesondere bei mittleren Stückzahlen wirtschaftlich durchführen zu können, ist gemäß der Erfindung ein Maschinentisch zum Aufspannen eines Feinblechabschnitts vorgesehen, der beim Herausschneiden eines Zuschnitts nach dem erfindungsgemäßen Verfahren vorteilhaft eingesetzt wird. Der erfindungsgemäße Maschinentisch zum Aufspannen eines Feinblechabschnitts weist eine Vielzahl von Ausnehmungen, insbesondere Bohrungen in der Oberseite und Werkstückauflagefläche des Tisches auf, die mit einer Unterdruckquelle leitungsverbunden sind, beispielsweise einer Vakuumpumpe, um das Werkstück auf der Werkstückauflagefläche anzusaugen und damit auf dem Maschinentisch festzulegen und zu spannen.

Gemäß der Erfindung weist die Werkstückauflagefläche mindestens eine vorzugsweise ausnehmungsfreie Nut auf, deren Verlauf zumindest abschnittsweise der Kontur des zu schneidenden Zuschnitts entspricht. Dabei ist die Nut erfindungsgemäß vorteilhaft so dimensioniert, dass beim Schneiden ein Freiraum für das Schneidwerkzeug gebildet ist. Grundgedanke des erfindungsgemäßen Maschinentisches ist es also, durch die Nut einen Freiraum für das Durchtrennungswerkzeug, also typischerweise den Fräser, zu schaffen. Vorteilhaft ist diese Nut ausnehmungsfrei gestaltet. Dieses ist wichtig, damit im Bereich der Nut selbst keine Absaugung erfolgt und somit etwaige beim Schneiden entstehende Partikel, insbesondere Späne, nicht in eine Ausnehmung oder gar die Unterdruckquelle gelangen können. Unter ausnehmungsfrei im Sinne der vorliegenden Erfindung sind daher solche Ausnehmungen zu verstehen, die zum Ansaugen des Werkstücks dienen, d. h. die mit einer Unterdruckquelle verbunden sind.

Für die beim Schneiden entstehenden Partikel ist erfindungsgemäß eine gesonderte Absaugung vorgesehen, die insbesondere im Zusammenhang mit einer glattflächigen hinterschneidungs- und ausnehmungsfreien Nut mit Absaugung von der Werkzeugseite aus besonders effizient ist. Mit einer solchen Ausbildung ist es möglich, durch einfache Luftabsaugung die Schneidpartikel unmittelbar nach dem Schneiden und vollständig zu entfernen.

Dabei ist die Nut vorteilhaft so dimensioniert, dass die Nutbreite geringfügig größer als der Fräserdurchmesser ist und die Nuttiefe derart, dass der Fräser so weit in die Nut eintauchen kann, dass der Schnitt vollständig mit dem zylindrischen Teil der Fräserwandung erfolgt. Grundsätzlich ist es möglich, mehrere Nuten für unterschiedliche Zuschnitte in einer Werkstückauflagefläche vorzusehen, besonders vorteilhaft hinsichtlich einer hohen Oberflächengüte ist es jedoch, wenn eine Nut nur entsprechend der Kontur des Zuschnitts umlaufend ausgebildet ist, da dann die beim Schneiden entstehenden Partikel besonders gut und vollständig entfernt werden können.

Grundsätzlich ist es zweckmäßig, das Werkstück, also den Feinblechabschnitt, aus dem der Zuschnitt herausgeschnitten werden soll, über seine gesamte Fläche mittels Unterdruck an die Werkstückauflagefläche des Maschinentisches anzusaugen, um eine Verwerfung des Materials zuverlässig zu verhindern. Besonders vorteilhaft ist es jedoch, die Haltekraft unmittelbar neben der Bearbeitung zu erhöhen. Dies erfolgt bei dem erfindungsgemäßen Maschinentisch dadurch, dass im unmittelbaren Nachbarschaftsbereich zu beiden Seiten der Nut eine größere Anzahl von Ausnehmungen vorgesehen ist als im übrigen Spannbereich. Wenn die Ausnehmungen als Bohrungen ausgebildet sind und diese gleich groß sind, ist in diesem Nachbarschaftsbereich der Nut vorteilhaft eine größere Anzahl von Bohrungen vorzusehen als im übrigen Bereich. Wenn Ausnehmungen unterschiedlicher Form und Größe vorgesehen werden, dann sollte die Summe der Querschnittsflächen der Ausnehmungen pro Flächeneinheit in dem Bereich neben der Nut deutlich größer als im übrigen Spannbereich sein.

In der Praxis haben sich Bereiche mit erhöhter Ansaugkraft in der Nachbarschaft der Nut als vorteilhaft erwiesen, wenn diese etwa der vier- bis zehnfachen Nutbreite entsprechen. Wenn also beispielsweise für einen 6 mm Fräser die Nut 8 mm breit ist, dann sollten die beiden Nachbarschaftsbereiche neben der Nut, die mit vermehrten Ausnehmungen versehen sind, jeweils 16 - 40 mm breit sein.

Da für die erfindungsgemäße Ausgestaltung des Maschinentisches eine Anpassung desselben an die Zuschnittkontur durch die Nut und gegebenenfalls die im Bereich der Nut vermehrt vorgesehenen Ausnehmungen vorzusehen ist, ist es besonders vorteilhaft, diese individuelle Anpassung durch ein Adapterbauteil, hier eine die Werkstückauflagefläche des Tisches bildende Adapterplatte, zu bilden, die auf einem Grundtisch des Maschinentisches angeordnet wird, auswechselbar ist und sowohl selbst mittels Vakuumspanntechnik mit dem Grundtisch verbunden werden kann als auch durch Vakuumspanntechnik das Werkstück halten kann.

Der erfindungsgemäße Maschinentisch besteht also aus dem eigentlichen Grundtisch, der standardisiert und werkstückunabhängig sein kann sowie der darauf anzubringenden auswechselbaren Adapterplatte, die an den jeweils zu fertigenden Zuschnitt angepasst ist. Bei dieser erfindungsgemäßen Weiterbildung sind weder besondere Mittel zum Festlegen der Adapterplatte auf den Grundtisch vorzusehen, noch besondere Mittel, um das Werkstück auf der Adapterplatte festzuspannen. Wenn die im Grundtisch vorhandenen Ausnehmungen, die standardisiert sind und mit einer Unterdruckquelle leitungsverbindbar sind, nur teilweise in der Adapterplatte fortgesetzt sind, dann wird über einen Teil der Ausnehmungen im Grundtisch die Adapterplatte angesaugt und über die anderen Ausnehmungen im Grundtisch, die sich in der Adapterplatte fortsetzen, das Werkstück angesaugt, d. h. der Feinblechabschnitt auf der Adapterplatte aufgespannt.

Dabei ist es konstruktiv hinsichtlich der Adapterplatte am einfachsten, wenn die in der Adapterplatte wirksamen Ausnehmungen zu Ausnehmungen in dem Grundtisch fluchten. Aus Gründen der Toleranz ist es allerdings vorteilhaft, wenn diese Ausnehmungen in der Adapterplatte zum Grundtisch hin aufgeweitet ausgebildet sind, da dann eine Leitungsverbindung auch sichergestellt ist, wenn die Adapterplatte um ein geringes Maß verschoben auf dem Grundtisch zur Anlage kommt.

Um insbesondere in den Randbereichen neben der Nut, wo eine erhöhte Ansaugung stattfinden soll, den notwendigen Sauganschluss grundtischseitig sicherzustellen, ist gemäß einer Weiterbildung der Erfindung vorgesehen, dass an der zum Grundtisch weisenden Seite der Adapterplatte ein oder mehrere nutartige Ausnehmungen vorgesehen sind, die mit Ausnehmungen in der Werkstückauflagefläche der Adapterplatte leitungsverbunden sind und die mehrere Ausnehmungen im Grundtisch übergreifen. Dabei können, um ausreichend Spannkraft zu erzeugen, gemäß einer vorteilhaften Weiterbildung der Erfindung diese nutartigen Ausnehmungen sich nicht nur im Bereich unterhalb der Ausnehmungen im Bereich der Werkstückauflagefläche der Adapterplatte, sondern vorteilhaft auch daneben erstrecken, um aus diesen Nebenbereichen, die im Grundtisch noch mit Ausnehmungen versehen sind, weitere Unterdruckkapazität abzuzweigen.

Die Erfindung ist nachfolgen anhand eines in der Zeichnung dargestellten Ausführungsbeispiels näher erläutert. Es zeigen:
- Fig. 1: in stark vereinfachter schematischer perspektivischer Darstellung eine Portalfräsmaschine mit einem Maschinentisch gemäß der Erfindung,

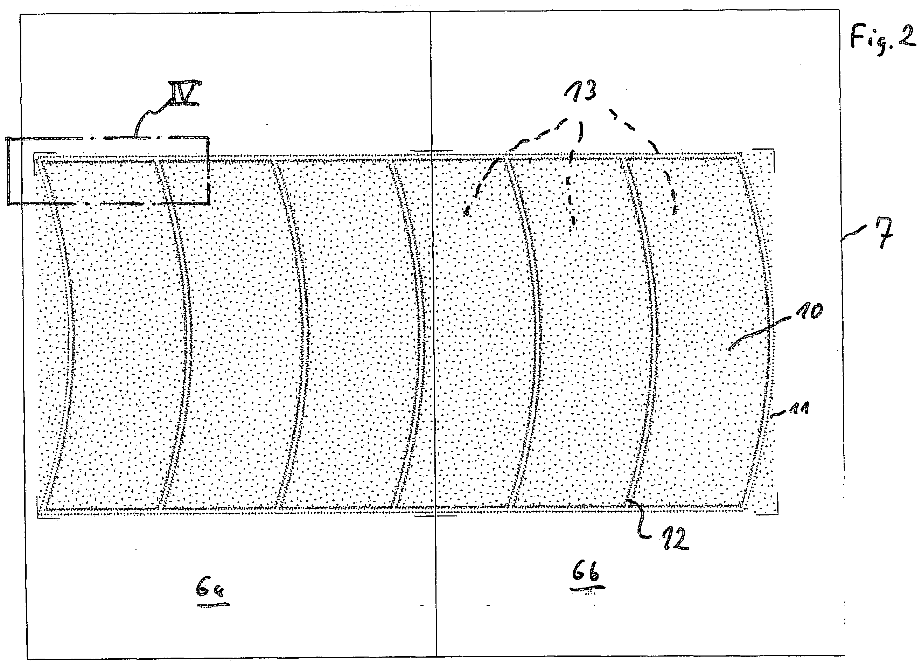

- Fig. 2: in vergrößerter Darstellung eine Draufsicht auf eine Adapterplatte,
- Fig. 3: eine Unteransicht der Adapterplatte gemäß Fig. 2,
- Fig. 4: in vergrößerter Darstellung die Einzelheit IV der Fig. 2,

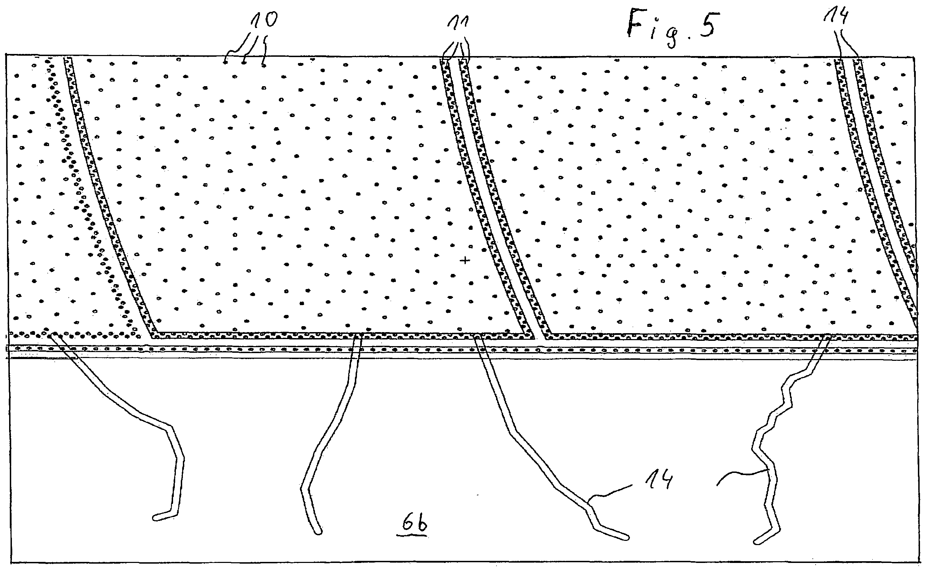

- Fig. 5: in vergrößerter Darstellung die Einzelheit V der Fig. 3 und
- Fig. 6: die Draufsicht auf ein Grundtischfeld.

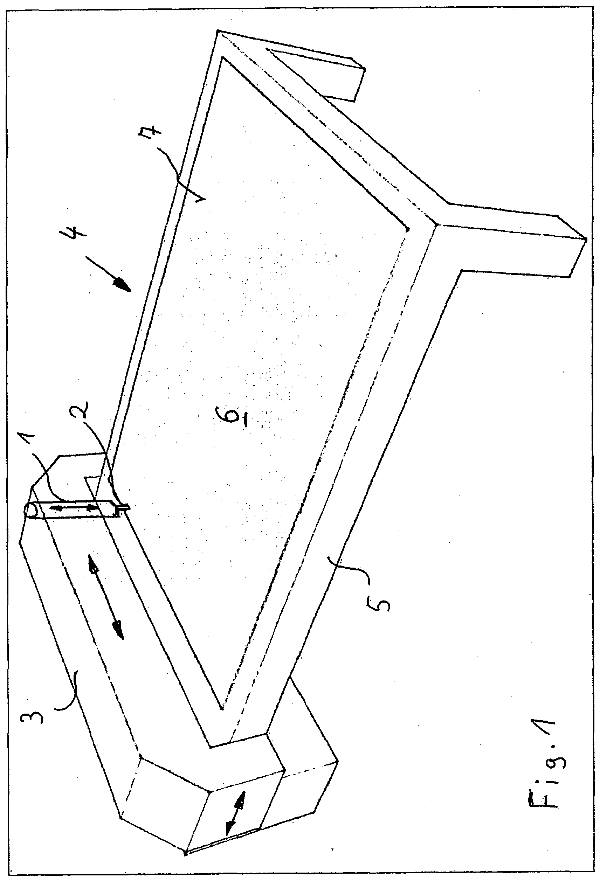

Die in Fig. 1 dargestellte Protalfräsmaschine weist einen Fräskopf 1 auf, der den Rotationsantrieb für einen Fräser 2 am unteren Ende des Fräskopfes 1 bildet. Der Fräskopf ist quer verfahrbar an einem Portal 3 angeordnet, welches längs verfahrbar an einem Maschinentisch 4 gelagert ist. Der Fräskopf 1 wird zum Fräsen so weit abgesenkt, dass der Fräser 2 einen auf dem Maschinentisch 4 aufgespannten Feinblechabschnitt in eine oder mehrere Zuschnitte teilen kann. Dabei wird durch entsprechende Ansteuerung des Fräskopfes quer zum Portal 4 und Ansteuerung des Portals längs des Maschinentisches 4 eine voreingestellte (programmierte) Bahnkurve gefahren, welche der Außenkontur und gegebenenfalls einer Innenkontur des Zuschnitts entspricht.

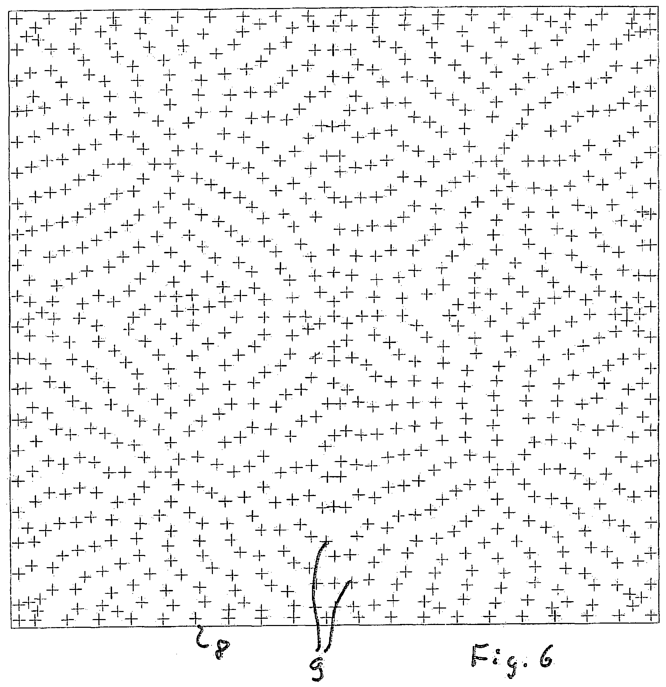

Der Maschinentisch 4 besteht aus einem Grundtisch 5, der den eigentlichen tragenden und funktionellen Tisch darstellt und der an seiner Oberseite mit einer Adapterplatte 6 ausgerüstet ist, welche die Werkstückauflagefläche 7 bildet. Der Grundtisch 5 ist als Lufttisch aufgebaut, d. h. er weist eine Anzahl von Feldern 8 auf, die jeweils, wie in Fig. 6 dargestellt, mit einer Anzahl von Ausnehmungen in Form von Bohrungen 9 versehen sind, die innerhalb des Tisches leitungsverbunden und an einer Unterdruckquelle in Form einer Vakuumpumpe angeschlossen sind.

Die Adapterplatte 6 besteht aus zwei Plattenhälften 6a und 6b, die nebeneinander auf dem Grundtisch 5 abgelegt sind. Die Adapterplatte 6 besteht aus Aluminiumblech und ist 4 mm dick. Sie weist in der Werkstückauflagefläche 7 Ausnehmungen in Form von Bohrungen 10 auf, die über die Fläche verteilt sind, sowie Ausnehmungen in Form von Bohrungen 11, die sich zu beiden Seiten einer in der Werkstückauflagefläche 7 der Adapterplatte 6 vorgesehenen Nut 12 erstrecken. Die Nut 12 ist frei von Ausnehmungen und entsprechend der Kontur der auszuschneidenden Werkstücke 13 angeordnet. Bei der anhand der Figuren darstellten Adapterplatte 6 umfasst die Nut 12 insgesamt sechs gleich große Zuschnitte 13. Die Zuschnitte 13 sind in den Figuren nicht zu sehen, da die Adapterplatte ohne den zuzuschneidenden Feinblechabschnitt dargestellt ist. Sie sind jedoch in den Figuren zum besseren Verständnis entsprechend beziffert. Die Nut 12 hat eine Tiefe von 2 mm, sodass der Fräser 2 beim Ausfräsen der Zuschnitte 13 mit Spiel innerhalb der Nut 12 verfährt, jedoch so weit abgesenkt werden kann, dass er ausschließlich mit seiner Seitenfläche schneidet.

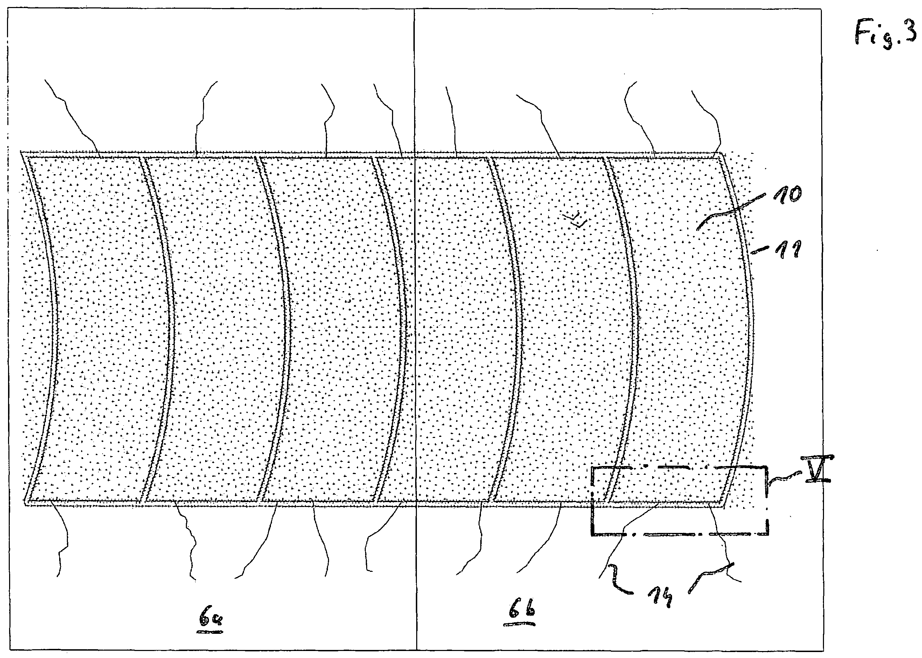

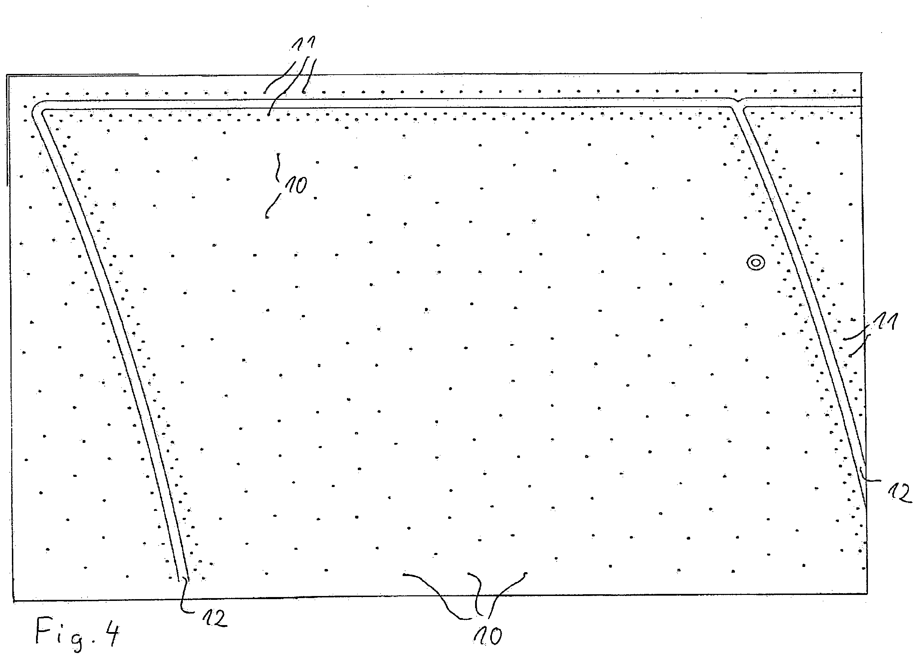

Wie anhand der Figuren 3 und 4 erkennbar ist, weist die Adapterplatte 6 Randbereiche neben den Zuschnitten 13 auf, die frei von Bohrungen sind. In diesen Randbereichen wird die Adapterplatte 6 bzw. die beiden Plattenhälften 6a und 6b auf den Grundtisch 5 vakuumverspannt, sobald die Felder 8 des Grundtisches 5 mit der Unterdruckquelle verbunden werden. Das Werkstück selbst, d. h. der Feinblechabschnitt, der in die Zuschnitte 13 zu zerteilen ist, wird auf der Adapterplatte 6 ebenfalls mittels Vakuumspanntechnik gespannt. Hierzu werden die Bohrungen 10 und 11 mit der Unterdruckquelle verbunden, und zwar durch die in diesem Bereich darunter befindlichen Bohrungen 9 im Grundtisch 5. Ein Teil der Bohrungen 10 und 11 fluchtet mit den Bohrungen 9 im Grundtisch 5. Um dies auch sicherzustellen, wenn die Adapterplatte 6 nicht exakt in der vorgesehenen Position am Grundtisch 5 liegt, sind die Bohrungen 10 und 11 in der Adapterplatte nach unten hin aufweitend ausgebildet. Darüber hinaus sind in den Bereichen, in denen die Bohrungen 11 angeordnet sind, an der Unterseite der Adapterplatte 6 nutartige Ausnehmungen 14 vorgesehen, die zum einen einen Freiraum bilden, welcher diese in hoher Flächendichte angeordneten Bohrungen 11 mit darunterliegenden Bohrungen 9 im Grundtisch 5 verbindet, die jedoch zum anderen auch außerhalb des Bereichs angeordnet sind, in welchem die Adapterplatte 6 Bohrungen 10, 11 aufweist. Über diese nutartigen Ausnehmungen 14 an der Unterseite der Adapterplatte 6 werden Bohrungen 9 im Grundtisch 5 leitungsverbunden, um auf diese Weise das Ansaugvolumen, insbesondere für die Bohrungen 11 und damit die Haltekraft zu verbessern. Die Bohrungen 11, die um die Nut 12 in hoher Dichte angeordnet sind, sorgen dafür, dass in den Randbereichen der Zuschnitte 13, also dort, wo der Fräser 2 beim Trennvorgang in den Feinblechabschnitt schneidend eingreift, mit besonders hoher Kraft auf der Adapterplatte 6 fixiert werden, um so sicherzustellen, dass insbesondere im Schneidbereich eine ausreichende Fixierung gegeben ist, andererseits jedoch auch sicherzustellen, dass die Auflage spaltfrei erfolgt, sodass keine Partikel in diesen Bereich gelangen können.

Um die Partikel während des Fräsens abzusaugen, ist ein den Fräser 2 umgebendes Saugrohr vorgesehen, welches während des Fräsvorgangs bis unmittelbar über die Oberseite des aufgespannten Feinblechabschnitts fährt und mit hohem Unterdruck abgesaugt wird. Dadurch, dass an der Unterseite des Feinblechabschnitts, dort, wo die Schnittfuge durch den Fräser 2 erzeugt wird, die geschlossene Nut 12 angeordnet ist, stellt sich durch die Nut 12 hindurch ein Absaugstrom ein, der dafür sorgt, dass auch in diesem Bereich Partikel, insbesondere Späne, zuverlässig abgesaugt werden.

Die vorstehend beschriebene Maschine dient zum Fertigen von Zuschnitten aus Feinblechabschnitten, also beispielsweise aus Aluminiumblechen, mit einer Dicke von 0,8 bis 2,5 mm, wie sie als Zuschnitte für Automobilkarosserieformteile Verwendung finden. Die Adapterplatte 6 ist an die jeweilige Zuschnittform angepasst, d. h. wenn ein Zuschnitt anderer Form gefertigt werden soll, ist die Adapterplatte 6 gegen eine entsprechend andere Adapterplatte mit anderem Nutverlauf auszutauschen.

### Bezugszeichenliste

- 1: Fräskopf
- 2: Fräser
- 3: Portal
- 4: Maschinentisch
- 5: Grundtisch
- 6: Adapterplatte
- 6a: linke Plattenhälfte
- 6b: rechte Plattenhälfte
- 7: Werkstückauflagefläche
- 8: Felder
- 9: Bohrungen in 8
- 10: Bohrungen in der Fläche
- 11: Bohrungen im Bereich um die Nut
- 12: Nut
- 13: Zuschnitte
- 14: nutartige Ausnehmungen

## Patentansprüche

1. Verfahren zum Herstellen eines Automobilkarosserieformteils, bei dem aus einem Feinblechabschnitt mindestens ein Zuschnitt herausgeschnitten wird, der nachfolgend durch plastische Verformung mit einem Tiefzieh- oder Presswerkzeug zu einem Hohlkörper geformt wird, der das Automobilkarosserieformteil oder zumindest einen Teil davon bildet, **dadurch gekennzeichnet, dass** der Feinblechabschnitt aus Leichtmetall besteht und das Herausschneiden des Zuschnitts durch spanabhebende Bearbeitung nämlich durch Fräsen, insbesondere durch High Speed Cutting, erfolgt.

2. Verfahren nach Anspruch 1, bei dem der Feinblechabschnitt aus Aluminium oder einer Aluminiumlegierung besteht.

3. Verfahren nach einem der vorhergehenden Ansprüche, **dadurch gekennzeichnet, dass** das Herausschneiden des Zuschnitts auf einer Fräsmaschine, insbesondere einer Portalfräsmaschine, mit einem Maschinentisch erfolgt, bei dem der Feinblechabschnitt während des Schneidens durch Vakuumspanntechnik auf dem Maschinentisch gehalten wird.

## Claims

1. A method for manufacturing a car body formed part, concerning which at least one blank is cut out of a fine sheet metal section, said blank being subsequently shaped into a hollow body by way of plastic deformation with a deep-drawing or pressing tool, said hollow body forming the car body formed part or at least a part thereof, **characterised in that** the fine sheet metal section consists of lightweight metal and the cutting-out of the blank is effected by way of material-removing machining, specifically by way of milling, in particular by way of high-speed cutting.

2. A method according to claim 1, with which the fine sheet metal section consists of aluminium or an aluminium alloy.

3. A method according to one of the preceding claims, **characterised in that** the cutting-out of the blank is effected on a milling machine, in particular a portal milling machine, with a machine table, concerning which the fine sheet metal section is held on the machine table by way of vacuum clamping technology during the cutting.

## Revendications

1. Procédé de fabrication d'une pièce de forme de carrosserie automobile, selon lequel au moins une pièce découpée est obtenue à partir d'un tronçon de tôle fine, qui est ensuite formée, par formage plastique à l'aide d'un outil d'emboutissage profond ou outil de presse, en un corps creux qui constitue la pièce de forme de carrosserie automobile ou au moins une partie de celle-ci, **caractérisé en ce que** le tronçon de tôle fine est en métal léger et **en ce que** la découpe de la pièce à découper est effectuée par usinage par enlèvement de matière, à savoir par fraisage, notamment par usinage à grande vitesse (High Speed Cutting).

2. Procédé selon la revendication 1, **caractérisé en ce que** le tronçon de tôle fine est en aluminium ou un alliage d'aluminium.

3. Procédé selon l'une quelconque des revendications précédentes, **caractérisé en ce que** la découpe de la pièce à découper est effectuée sur une fraiseuse, notamment une fraiseuse à portique, avec une table de travail configurée de façon que le tronçon de tôle fine soit maintenu sur la table de travail par la technique de serrage à vide.
